# EUROPÄISCHE PATENTSCHRIFT

(11) **EP 1 190 911 B1**
(45) Veröffentlichungstag und Bekanntmachung des Hinweises auf die Patenterteilung: **16.02.2005**
(21) Anmeldenummer: 01122507.5
(22) Anmeldetag: 21.09.2001
(51) Int. Cl.: B60R 13/10, G09F 7/16

(54) **Verfahren zur Herstellung von Platinen für Kraftfahrzeugnummernschilder und Folie zur Verwendung in einem derartigen Verfahren**
Method for manufacturing vehicle licence plates and foil to be used with this method
Méthode de fabrication de plaques d'immatriculation de véhicules et feuille à utiliser pour cette méthode

(30) Priorität: 22.09.2000 DE 10047158
(43) Veröffentlichungstag der Anmeldung: 27.03.2002
(73) Patentinhaber: ALCAN DEUTSCHLAND GMBH, D-37075 Göttingen (DE)
(72) Erfinder: Bode, Werner, 37133 Friedland (DE); Niemietz, Burkhard, 37120 Bovenden (DE)
(74) Vertreter: HOFFMANN - EITLE

(56) Entgegenhaltungen:
- DE-A- 4 219 869
- H. KUCHLING: "Taschenbuch der Physik" 1988 , VERLAG HARRI DEUTSCH , THUN UND FRANKFURT/MAIN XP002254669 * Seite 176-177 *

## Beschreibung

### Technisches Gebiet

Die Erfindung betrifft ein Verfahren zur Herstellung von Platinen für Kraftfahrzeug-Nummernschilder nach dem Oberbegriff des Anspruchs 1 sowie eine Folie zur Verwendung in einem derartigen Verfahren nach dem Oberbegriff des Anspruchs 7.

Platinen für Kraftfahrzeug-Nummernschilder, die zur Erstellung des eigentlichen Nummernschildes mit dem individuellen Aufdruck bedruckt und geprägt werden, werden im Wesentlichen dadurch hergestellt, dass auf ein Blechband eine Folie mit bestimmten vorgegebenen grafischen Elementen aufkaschiert wird. Von dem Blechband werden nachfolgend die einzelnen Platinen abgetrennt.

### Stand der Technik

Aus der DE 40 40 386 C1 ist es bekannt, die auf das Blechband aufzukaschierende Folie nicht nur mit grafischen Elementen, wie z.B. dem sogenannten Euro-Symbol zu versehen, sondern auch den umlaufenden, schwarzen Rand auf die Folie zu drucken, bevor diese aufkaschiert wird.

Die DE 198 16 605 A1, die ein Verfahren nach dem Oberbegriff des Anspruchs 1 sowie eine Folie nach dem Oberbegriff des Anspruchs 7 offenbart, lehrt, eine Folie auf Untermaß mit sich wiederholenden grafischen Elementen, zu bedrucken und die Folie vor oder während des Aufkaschierens kontrolliert zu dehnen, so dass die sich wiederholenden grafischen Elemente nach dem Aufkaschieren den erforderlichen Abstand voneinander aufweisen. In dieser Druckschrift ist ferner vorgeschlagen, eine Folie zu verwenden, die zusätzlich einen vorgedruckten Rand aufweist. Hierbei sind in diesem Stand der Technik jedoch keine Angaben darüber gemacht, wie im Rahmen des Dehnens der Folie verhindert wird, dass die grafischen Elemente und der schwarze Rand in Breitenrichtung nach dem Aufkaschieren Abmessungen aufweisen, die nicht mehr den Anforderungen entsprechen. Wenn sich beispielsweise die den schwarzen Rand definierenden Streifen, insbesondere die in Längsrichtung verlaufenden Streifen, während des Dehnens nennenswert aneinander annähern, besteht das Problem, dass der schwarz eingefärbte Rand entweder nicht auf dem später geprägten Rand angeordnet ist, oder die Randprägung, wenn sie dem verringerten Abstand der Bedruckung angepasst wird, nicht dem vorgegebenen Maß entspricht.

### Darstellung der Erfindung

Ausgehend hiervon liegt der Erfindung die Aufgabe zugrunde, ein Verfahren zur Herstellung von Platinen für Kraftfahrzeug-Nummernschilder sowie eine hierfür zu verwendende Folie zu schaffen, durch die mit einfachen Maßnahmen sichergestellt werden kann, dass beispielsweise der umlaufende schwarze Rand auch nach dem Aufkaschieren, bei dem ein Dehnen in Längsrichtung erfolgt, den vorgeschriebenen Abstand aufweist.

Die Lösung dieser Aufgabe erfolgt zum einen durch das im Patentanspruch 1 beschriebene Verfahren.

Demzufolge wird eine Folie zunächst in Folienlängsrichtung auf Untermaß mit sich wiederholenden grafischen Elementen bedruckt. Bei den grafischen Elementen kann es sich insbesondere um das bekannte Euro-Symbol und den schwarzen, umlaufenden Rand handeln. Im Rahmen des Aufkaschierens der Folie auf ein Blechband wird zum einen das Blechband und zum anderen die Folie zugeführt. Nachfolgend wird die Folie auf das Blechband aufkaschiert oder auflaminiert, wobei sie vor oder während dieses Vorgangs derart gedehnt wird, dass der Abstand zwischen bestimmten grafischen Elementen einem vorgegebenen Soll-Abstand plus/minus Toleranz entspricht.

Erfindungsgemäß kann nun bei einem derartigen Verfahren ein kostengünstiges und nicht in aufwendiger Weise besonders ausgebildetes Material für die Folie verwendet werden, indem diese im Rahmen des Bedruckens in Breitenrichtung auf Übermaß bedruckt wird. Der Erfindung liegt gewissermaßen der Grundgedanke zugrunde, eine gewisse Einschürung der Folie im Rahmen der Dehnung in Längsrichtung zuzulassen, und durch eine kontrollierte Bedruckung in Breitenrichtung auf Übermaß sicherzustellen, dass die grafischen Elemente nach dem Dehnen und Aufkaschieren in Breitenrichtung den vorgeschriebenen Abstand oder die vorgeschriebene Abmessung aufweisen. Hierdurch kann gemäß der Erfindung auf besondere Maßnahmen im Zusammenhang mit der Folie verzichtet werden, die verhindern, dass im Rahmen der Dehnung in Längsrichtung eine derartige Einschnürung in Breitenrichtung erfolgt, dass die erforderlichen Abmessungen verlassen werden.

Ferner bietet die Erfindung insbesondere im Zusammenhang mit der Bedruckung der Folie mit dem schwarzen, umlaufenden Rand, den wesentlichen Vorteil, dass dieser nicht im Rahmen des Prägens des Schildes aufgedruckt werden muss. Herkömmlicherweise erfolgt das Prägen der Buchstaben und Ziffern bei einem Schilderhersteller. Für die Bedruckung der erhaben geprägten Bereiche mit schwarzer Farbe wird eine sogenannte Transferfolie verwendet, die in vorteilhafter Weise wesentlich schmäler ausgebildet werden kann, wenn der schwarze Rand bereits auf der Platine vorhanden ist, weil in diesem Fall mit der Transferfolie lediglich die Buchstaben und Zahlen aufgedruckt werden müssen. Erfindungsgemäß kann der umlaufende schwarze Rand bereits auf die Platine gedruckt sein, und durch das Vorsehen eines Übermaßes an der aufzukaschierenden Folie ist stets sichergestellt, das der schwarze Rand die erforderlichen Abmessungen aufweist, so dass die nachfolgend aufgebrachte Prägung ebenfalls an der richtigen Stelle erfolgt.

Bevorzugte Weiterbildungen des erfindungsgemäßen Verfahrens sind in den weiteren Ansprüchen beschrieben.

Wie vorangehend erwähnt, wird für die Folie bevorzugt, dass sie im Rahmen des erfindungsgemäßen Verfahrens abschnittsweise mit dem an den Kraftfahrzeug-Nummernschildern umlaufenden, schwarzen Rand bedruckt wird. Unter abschnittsweise ist zu verstehen, dass die Folie als fortlaufendes Band vorliegt, auf das nacheinander zahlreiche umlaufende Ränder gedruckt werden, die jeweilige, nachfolgend abzutrennende Platinen definieren.

Im Hinblick auf die vorgesehene Dehnung in Längsrichtung und Einschnürung in Seitenrichtung haben Versuche ergeben, dass sich eine Dehnung der Folie in Längsrichtung um etwa 1 % bis 2 %, insbesondere etwa 1,3 %, besonders gut für das zuverlässige Aufbringen der Folie derart, dass die sich wiederholenden grafischen Elemente den vorgegebenen Abstand voneinander aufweisen, eignet. Für die hierbei auftretende Einschnürung ist vorgesehen, dass eine Einschnürung, also Reduzierung der Breitenabmessung, um etwa 0,3 % bis 0,7 % und insbesondere um etwa 0,5 % erfolgt.

Für die vorgegebenen Abmessungen von Nummernschildern hat sich für das Ausmaß des Übermaßes bei der Bedruckung in Breitenrichtung eine Größenordnung von 0,5 mm als besonders günstig erwiesen.

Schließlich kann im Rahmen des erfindungsgemäßen Verfahrens zuverlässig sichergestellt werden, dass die einzelnen Platinen in der vorgeschriebenen Art und Weise mit den grafischen Elementen versehen sind, wenn, wie bevorzugt, die Position der sich wiederholenden grafischen Elemente, insbesondere des Randes, im Rahmen des Herstellungsverfahrens überwacht werden.

Die Lösung der oben genannten Aufgabe erfolgt erfindungsgemäß ferner durch die im Patentanspruch 7 beschriebene Folie. Dementsprechend ist die zur Verwendung in dem erfindungsgemäßen Verfahren geeignete Folie in Längsrichtung auf Untermaß, und in Breitenrichtung auf Übermaß bedruckt. Wie oben ausgeführt, kann es hierdurch für die Folie zugelassen werden, dass sie sich im Rahmen der Dehnung beim Aufkaschieren oder -laminieren in Breitenrichtung ein wenig einschnürt, weil mittels der Bedruckung auf Übermaß die grafischen Elemente auch nach diesem Einschnüren die vorgeschriebenen Abstände und Abmessungen aufweisen. Bevorzugte Weiterbildungen der erfindungsgemäßen Folie entsprechen den Maßnahmen, die vorangehend im Zusammenhang mit dem erfindungsgemäßen Verfahren angegeben wurden.

### Kurze Beschreibung der Zeichnungen

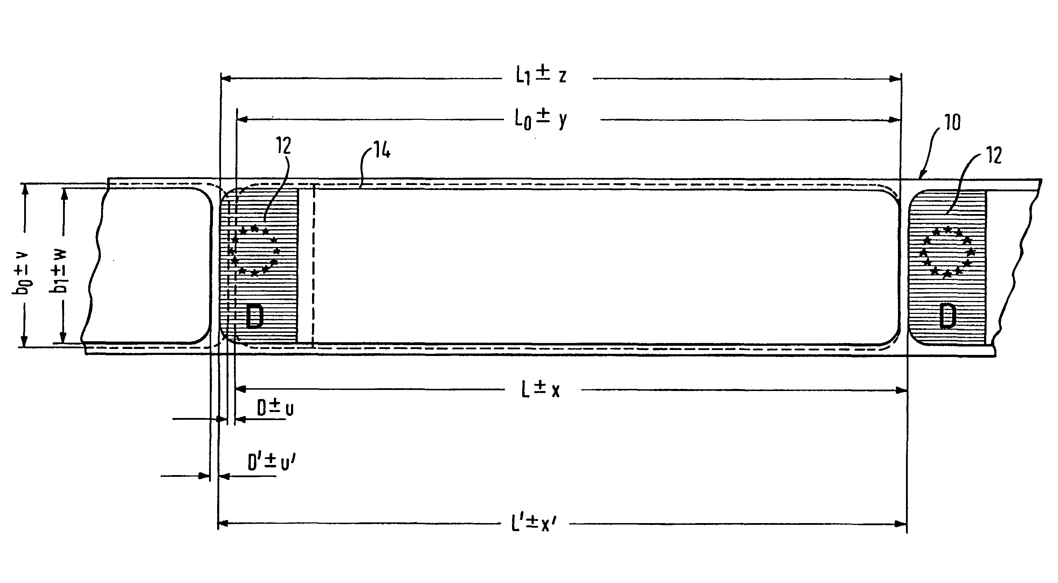

Nachfolgend wird eine Ausführungsform der Erfindung unter Bezugnahme auf die Zeichnung näher erläutert.

Die Figur zeigt einen Abschnitt eines Blechbandes mit einer darauf aufkaschierten Folie, wobei die Bedruckung der Folie sowohl vor als auch nach dem Aufkaschieren dargestellt ist.

Ausführliche Beschreibung einer bevorzugten Ausführungsform der Erfindung

In der Figur ist ein Abschnitt eines Blechbandes 10 gezeigt, auf das eine vorangehend mit sich wiederholenden grafischen Elementen bedruckte Folie aufkaschiert ist. Die grafischen Elemente, insbesondere das sogenannte Euro-Symbol 12 sowie, wie bevorzugt vorgesehen, ein umlaufender Rand 14, sind in der Figur zum einen, in durchgezogenen Linien, mit den endgültigen Abmessungen und ihrer endgültigen Position gezeigt. Mit gestrichelten Linien sind die genannten Elemente in dem Fall gezeigt, dass die Folie mit diesen Elementen bedruckt ist, jedoch noch nicht auf das Blechband aufkaschiert oder auflaminiert wurde. Wie aus der Figur zu erkennen ist, weist die Bedruckung vor dem Aufkaschieren in der Längsrichtung des Bandes ein Untermaß, und in der Breitenrichtung des Bandes ein Übermaß auf. Im Rahmen des erfindungsgemäßen Verfahrens erfolgt vor oder während des Aufkaschierens eine Dehnung in Längsrichtung, und die erfindungsgemäß zugelassene Einschnürung in Breitenrichtung bringt die mit Übermaß vorgesehene Bedruckung in diejenige Position, die für die Einhaltung der Vorschriften erforderlich ist.

Hierbei haben sich im Rahmen des erfindungsgemäßen Verfahrens für die in der Figur eingezeichneten Maße folgende Verhältnisse als günstig erwiesen. Bei der aufzubringenden, also noch nicht gedehnten, jedoch bereits bedruckte Folie, weist der schwarze Rahmen ein Außenmaß L₀ ± Toleranz y von 511,0 mm auf. Für die Breite einschließlich Toleranz ist ein Maß bo ± v = 110 mm vorgesehen. Zwei aufeinanderfolgende Rahmen weisen einen Abstand D ± u von 4,0 mm auf. Dementsprechend weisen die Euro-Logos zweier aufeinanderfolgender Schilder einen Abstand von L ± x = 515,0 mm auf.

Durch diese kontrollierte Bedruckung der Folie, in Längsrichtung auf Untermaß, und in Breitenrichtung auf Übermaß, stellen sich nach dem Aufkaschieren auf das Blechband 10 folgende Maße ein. Der schwarze Rahmen weist Außenmaße (Länge x Breite) von L₁ ± z = 517,5 mm x b₁ ± w = 109,5 mm auf. Der Abstand zwischen zwei aufeinanderfolgenden Rahmen D' ± u' ergibt sich zu 4,1 mm, und dementsprechend stellt sich zwischen den Euro-Logos zweier aufeinanderfolgender Platinen ein Abstand von L' ± x' = 521,6 mm ein. Aus dem Vergleich der Abmessungen des umlaufenden Randes vor und nach dem Aufkaschieren ergibt sich, dass die Folie bei dieser bevorzugten Ausführungsform um etwa 1,3 % gestreckt wurde, und hierbei eine Einschnürung um ca. 0,5 % erfolgte. Die sich nach dem Aufkaschieren einstellenden Abmessungen des Randes entsprechen den vorgeschriebenen Maßen, so dass im Rahmen der Prägung des Schildes sichergestellt ist, dass die umlaufende Randsicke in einer korrekten Position bezüglich der schwarzen Randbedruckung erfolgt und aus dem entstehenden Metallband Platinen für Kraftfahrzeug-Nummernschilder geschnitten werden können, die ebenso den Anforderungen entsprechen.

## Patentansprüche

1. Verfahren zur Herstellung von Platinen für Kraftfahrzeug-Nummernschilder mit folgenden Schritten:
- Bedrucken einer Folie mit sich wiederholenden grafischen Elementen (12, 14) in Folienlängsrichtung auf Untermaß,
- Zuführen eines Blechbandes (10),
- Zuführen der bedruckten Folie,
- Aufkaschieren oder -laminieren der bedruckten Folie auf das Blechband (10) wobei die Folie vor oder während des Aufkaschierens derart gedehnt wird, dass der Abstand zwischen den sich wiederholenden grafischen Elementen (12, 14) eine vorgegebenen Soll-Abstand plus/minus Toleranz entspricht,
**dadurch gekennzeichnet, dass**
die Folie im Rahmen des Bedruckens in Breitenrichtung auf Übermaß bedruckt wird.

2. Verfahren nach Anspruch 1,
**dadurch gekennzeichnet, dass**
die Folie abschnittsweise mit einem umlaufenden, schwarzen Rand (14) bedruckt wird.

3. Verfahren nach Anspruch 1 oder 2,
**dadurch gekennzeichnet, dass**
die Folie vor oder während des Aufkaschierens um etwa 1 % bis 2 % gedehnt wird, und um etwa 0,3 % bis 0,7 % eingeschnürt wird.

4. Verfahren nach Anspruch 3,
**dadurch gekennzeichnet, dass**
die Folie vor oder während des Aufkaschierens um etwa 1,3 % gedehnt wird, und um etwa 0,5 % eingeschnürt wird.

5. Verfahren nach einem der vorangehenden Ansprüche,
**dadurch gekennzeichnet, dass**
die Bedruckung in Breitenrichtung mit einem Übermaß von etwa 0,5 mm erfolgt.

6. Verfahren nach zumindest einem der vorangehenden Ansprüche,
**dadurch gekennzeichnet, dass**
die Position der sich wiederholenden grafischen Elemente (12, 14) an der aufkaschierten Folie überwacht wird.

7. Folie zur Verwendung in einem Verfahren zur Herstellung von Platinen für Kraftfahrzeug-Nummernschilder, die in Längsrichtung auf Untermaß bedruckt ist,
**dadurch gekennzeichnet, dass**
die Folie in Breitenrichtung mit Übermaß bedruckt ist.

8. Folie nach Anspruch 7,
**dadurch gekennzeichnet, dass**
die Folie abschnittsweise mit einem umlaufenden, schwarzen Rand (14) bedruckt ist.

9. Folie nach Anspruch 7 oder 8,
**dadurch gekennzeichnet, dass**
die Folie in Breitenrichtung mit einem Übermaß von etwa 0,5 mm bedruckt ist.

## Claims

1. Method for producing plates for motor vehicle registration plates comprising the following steps:
- printing sheeting with repeating graphical elements (12, 14) smaller than the final dimension in the longitudinal direction of the sheeting,
- supplying a sheet metal strip (10),
- supplying the printed sheeting,
- laminating the printed sheeting onto the sheet metal strip (10), wherein the sheeting is stretched prior to or during the lamination process in such a way that the spacing between the repeating graphical elements (12, 14) corresponds to a predetermined desired distance plus/minus tolerance,
**characterised in that**
during the printing process the sheeting receives printing larger than the final dimension in the width direction.

2. Method as claimed in claim 1, **characterised in that** portions of the sheeting are printed with a peripheral black edge (14).

3. Method as claimed in claim 1 or 2, **characterised in that** prior to or during the lamination process the sheeting is stretched by approximately 1% to 2% and is narrowed by approximately 0.3% to 0.7%.

4. Method as claimed in claim 3, **characterised in that** prior to or during the lamination process the sheeting is stretched by approximately 1.3% and narrowed by approximately 0.5%.

5. Method as claimed in any one of the preceding claims, **characterised in that** the printing in the width direction is approximately 0.5mm larger than the final dimension.

6. Method as claimed in at least one of the preceding claims, **characterised in that** the position of the repeating graphical elements (12, 14) on the laminated sheeting is monitored.

7. Sheeting for use in a method for producing plates for motor vehicle registration plates which receives printing smaller than the final dimension in the longitudinal direction, **characterised in that** the sheeting receives printing larger than the final dimension in the width direction.

8. Sheeting as claimed in claim 7, **characterised in that** portions of the sheeting are printed with a peripheral black edge (14).

9. Sheeting as claimed in claim 7 or 8, **characterised in that** in the width direction the sheeting receives printing approximately 0.5mm larger than the final dimension.

## Revendications

1. Procédé pour fabriquer des plaques d'immatriculation de véhicules, comprenant les étapes suivantes :
■ impression d'une feuille avec des éléments graphiques (12, 14) se répétant dans le sens de la longueur de la feuille à une dimension inférieure à la cote prescrite,
■ arrivée d'une bande de tôle (10),
■ arrivée de la feuille imprimée,
■ application par contre-collage/laminage de la feuille imprimée sur la bande de tôle (10), la feuille étant tendue avant ou pendant l'application du contre-collage de telle sorte que la distance entre les éléments graphiques (12, 14) qui se répètent correspond à une distance théorique prédéfinie plus ou moins la tolérance,
**caractérisé en ce que** la feuille est imprimée dans le cadre de l'impression dans le sens de la largeur à une dimension supérieure à la cote prescrite.

2. Procédé selon la revendication 1, **caractérisé en ce que** la feuille est imprimée par portions avec une bordure (14) noire périphérique.

3. Procédé selon la revendication 1 ou 2, **caractérisé en ce que** la feuille est allongée d'environ 1 à 2 % avant ou pendant l'application par contre-collage, et est rétrécie d'environ 0,3 % jusqu'à 0,7 %.

4. Procédé selon la revendication 3, **caractérisé en ce que** la feuille est allongée d'environ 1,3 % avant ou pendant l'application par contre-collage, et est rétrécie d'environ 0,5 %.

5. Procédé selon l'une quelconque des revendications précédentes, **caractérisé en ce que** l'impression dans le sens de la largeur s'effectue avec une surcote d'environ 0,5 mm.

6. Procédé selon au moins l'une quelconque des revendications précédentes, **caractérisé en ce que** la position des éléments (12, 14) graphiques qui se répètent est contrôlée sur la feuille appliquée par contre-collage.

7. Feuille pour une utilisation dans un procédé pour fabriquer des plaques d'immatriculation de véhicules, qui sont imprimées dans le sens de la longueur à une dimension inférieure à la cote prescrite, **caractérisée en ce que** la feuille est imprimée dans le sens de la largeur avec une surcote.

8. Feuille selon la revendication 7, **caractérisée en ce que** la feuille est imprimée par portions avec une bordure (14) noire périphérique.

9. Feuille selon la revendication 7 ou 8, **caractérisée en ce que** la feuille est imprimée dans le sens de la largeur avec une surcote d'environ 0,5 mm.
